(19) Europäisches Patentamt
European Patent Office
Office européen des brevets

(11) Publication number: 0 222 587 B1

(12) **EUROPEAN PATENT SPECIFICATION**

(45) Date of publication of the patent specification: **06.09.89**

(51) Int. Cl.⁴: **B 01 D 17/05**, C 10 G 33/04

(21) Application number: **86308586.6**

(22) Date of filing: **04.11.86**

(54) **Demulsifiers.**

(30) Priority: **07.11.85 GB 8527478**

(43) Date of publication of application: **20.05.87 Bulletin 87/21**

(45) Publication of the grant of the patent: **06.09.89 Bulletin 89/36**

(84) Designated Contracting States: **DE FR GB GR IT NL**

(56) References cited:
**EP-A- 0 141 585**
**GB-A- 1 439 793**

(73) Proprietor: **BP Chemicals Limited, Belgrave House 76 Buckingham Palace Road, London, SW1W 0SU (GB)**

(72) Inventor: **Psaila, Alexander Francis BP Chemicals Limited, Barry Sully CF6 2YU, South Glamorgan (GB)**

(74) Representative: **Krishnan, Suryanarayana Kalyana et al, BP INTERNATIONAL LIMITED Patents & Agreements Division Chertsey Road, Sunbury-on-Thames Middlesex TW16 7LN (GB)**

**EP 0 222 587 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a composition suitable for use as a demulsifier to break up hydrocarbon-water emulsions, especially for demulsifying crude oil-water emulsions.

It is well known that crude oil recovered from an oil well is generally associated with saline water and gas. The crude oil recovered is usually in an emulsified form with the saline water. Such emulsions are relatively stable due to the presence of natural emulsifying agents such as asphaltenes and resins.

It has long been recognised that such emulsions have to be broken or demulsified. Otherwise, the salt and water present in the emulsion may (a) reduce the value of the crude oil, (b) lead to corrosion of pipelines and processing plants and (c) poison some catalysts used in downstream processing of the crude oil. Moreover, in certain countries a tax is levied on the volume of crude oil recovered and the economics of oil recovery may be adversely affected if the actual volume of oil produced is distorted by the presence of water.

It is known that demulsification of crude oil-water emulsions can be achieved by treating the emulsion with compounds such as e.g. polyoxyalkylene-polysiloxane copolymers, oxyalkylated phenols, certain alkanolamines and phenol-aldehyde resin alkoxylates.

GB 1 439 793 for instance claims and describes a demulsifying agent which is of 0.2 to 30% by weight of (a) polyoxyalkylene-polysiloxane block copolymers containing polyoxyalkylene blocks each having a molecular weight of from 500-4000 and in which the oxyethylene and oxypropylene units are present in a proportion from 40:60 to 100:0 by weight and containing polysiloxane blocks each having 3 to 50 silicon atoms, and 70 to 99.8% of (b) a polyoxyalkylene demulsifier which is free of silicon. Included in the silicon free demulsifiers listed are the oxyalkylated phenolaldehyde resins.

It has now been found that by controlling the molecular weight of the polyoxyalkylene-polysiloxane component of such blends, the synergistic demulsifying effect achived is far in excess of the results obtained hitherto.

Accordingly, the present invention is a composition suitable for use as a demulsifying agent said composition comprising a blend of (a) a polyoxyalkylene-polysiloxane copolymer comprising a block or random copolymer of the general formula:

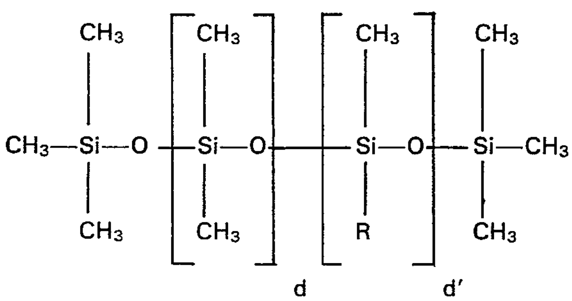

wherein d = 1 to 400 and d' = 1 to 50 and R is a block or random copolymer group of general formula:

$$-R'O(EO)_m(PO)_nR''$$

wherein R' is an alkylene group containing 3 to 10 carbon atoms, EO is an ethylene oxide group, Po is a propylene oxide group, R'' is an -OH radical, a hydrogen atom, a hydrocarbon group or an ester group, neither group containing more than 7 carbon atoms and m and n are numbers in the range 2 to 11 and 0 to 8 respectively, and the total of m and n is such that together they give rise to a polyoxyalkylene group having a weight average molecular weight below 500 as measured by the hydroxyl method, and (b) an alkoxylated derivative of a phenol-aldehyde resin, said resin having a (i) phenol to aldehyde ratio of 2:1 to 1:5, (ii) a weight average molecular weight from 500-20,000 as determined by gel permeation chromatography against a polystyrene standard and (iii) a free aldehyde content below 6% by weight.

Preferably d = 10 to 150 and d' = 1 to 30; R' is a $C_3$ group, m and n are numbers in the range 3 to 10 and 0 to 4 respectively, and R'' is methyl.

The polysiloxane groups

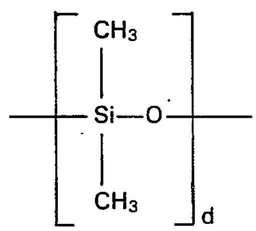

and

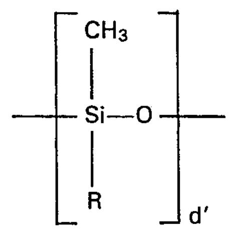

may be in block or may de randomly interspersed.

The polyether group R preferably has a molecular weight in the range 200 to below 500, most preferably in the range 200 to 450, and preferably contains ethylene oxide and propylene oxide units in a ratio m:n in the range 40:60 to 100:0.

The polysiloxane-polyalkylene oxide copolymers may be prepared by reacting in known manner a polysiloxane of general formula:

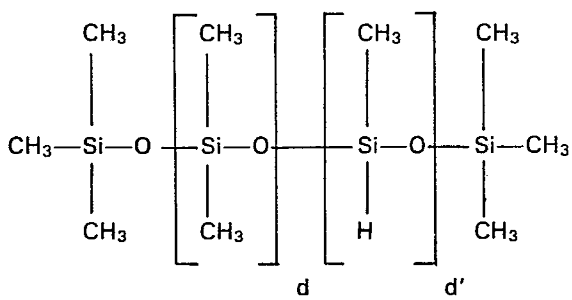

wherein d and d' are as hereinbefore defined, with an unsaturated polyether of general formula:

$$R'''O(EO)_m(PO)_nR''$$

wherein EO, PO, R'', m and n are as hereinbefore described and R''' is the olefinically unsaturated analogue of R'.

Where the unsaturated polyether contains both EO and PO groups such a copolymer may be prepared by the addition of a mixture of ethylene oxide and propylene oxide to an unsaturated alcohol or ether. The oxides may be added stepwise, sequentially or as a mixture.

For example, the allyl alcohol polyether, $CH_2 = CH\text{-}CH_2\text{-}O\text{-}(EO)_m(PO)_nR''$ will react with the Si-H bond to produce a $Si\text{-}CH_2(CH_2)_2O(EO)_m(PO)_nR''$ linkage. In principle R' may be derived from any unsaturated alcohol which is capable of being added to the above Si-H bond. Alcohols containing 3 to 10 carbon atoms per molecule are suitable with allyl alcohol being preferred.

The phenolic resins may be prepared by reacting an aldehyde with a phenol in the presence of an alkaline or acidic catalyst. The phenol may be a simple or alkyl substituted phenol and the alkyl group where present suitably has 1-18 carbon atoms, preferably in the ortho- or para-position with respect to the phenolic hydroxyl group. Examples of such alkyl phenolics are para-tert-butyl phenol and para-tert-amyl phenol.

The phenol-aldehyde resin to be alkoxylated is suitably an alkyl phenol-formaldehyde resin and has an alkyl phenol to formaldehyde ratio of 2:1 to 1:1.5, a weight average molecular weight of 500 to 5000 as measured by gel permeation chromatography against a polystyrene standard and a free aldehyde content, where applicable, of not more than 6% by weight. Typical examples of the resins that may be used include the resoles and novolaks derived from para-tertiary butyl phenol and para-tertiary amyl phenol.

The phenol-aldehyde resins may be alkoxylated by conventional methods, the amount of alkoxylating olefin oxide depending upon the type of resin used and the type of emulsion to be demulsified. The total alkoxy content of the alkoxylated phenol-aldehyde resin is suitably from 1-50 moles per mole of -OH grouping present in the resin. The alkoxylate may be derived using ethylene oxide alone or using a mixture of ethylene oxide and propylene oxide. Where a mixture of ethylene oxide and propylene oxide is used these may be present as block or random units. The relative ratio of the ethylene oxide and propylene oxide in a given mixture will depend upon the nature of the phenolic component in the resin.

In the demulsified compositions of the present invention the optimum ratio of phenol-aldehyde resin alkoxylate and the polyoxyalkylene polysiloxane copolymer was found to vary in the region of 1:20 to 20:1 depending on the origin of the crude oil emulsion.

The compositions of the present invention may contain in addition other well known demulsifiers provided that the two essential components now specified, i.e. the siloxane polyether copolymer and the phenol-aldehyde resin alkoxylate are present.

For example, polyoxyalkylene glycol of molecular weight in the region of 1000 to 5000 (determined by hydroxy number) may also be present, where the alkylene oxides are selected from ethylene oxide, propylene oxide, butylene oxide and styrene oxide. The polyalkylene glycol is preferably derived from blocs of polyoxyethylene and polyoxypropylene glycol.

Preferably the emulsion is of the water-in-oil type, e.g. water in a crude oil or a petroleum fraction.

Suitable demulsifier concentrations are in the range 1 to 500, preferably 2 to 50 ppm.

Demulsification can be carried out at a temperature in the range ambient up to 150°C.

The composition of the present invention may be used to achieve both dehydration and desalting of the emulsion as appropriate.

The demulsifier compositions of the present invention may be used in both gravity and electrostatic methods for emulsion breaking.

The present invention is further illustrated with reference to the following Examples.

*Examples and Comparative Tests*

In the following Examples and Comparative Tests the following abbreviations have been used for convenience:

$MD_dD_{d'}M$ - the polysiloxane

Wherein M is a trimethyl siloxane group
D is a dimethyl siloxane group and
D' is a $CH_3\text{-}Si(O)R$- group where R is the polyether group APEG as defined below.

APEG - the allyl ether of polyoxyethylene glycol.

All the compositions used are in solutions of an aromatic hydrocarbon solvent such as an alkyl or polyalkyl benzene, e.g. toluene or xylene. Compositions A-F below are 30% w/w solutions whereas composition G is a proprietary product (ex-Petrolite) and is a 50% w/w solution. The molecular weights quoted for the APEG's are the weight average molecular weight as determined by the -OH technique unless otherwise stated.

1.1 I. *Demulsifying Compositions*

| | | (APEG Mol wt) |
|---|---|---|
| A | $M\,D_{138}D'_{18}M$ + APEG 370 | 370 |
| B | $M\,D_{133\cdot3}D'_{16\cdot7}M$ + APEG 410-OMe capped | 425 |
| C | $M\,D_{66\cdot7}D'_{8\cdot4}M$ + APEG 410 | 410 |
| D | $M\,D_{43\cdot1}D'_{6\cdot9}M$ + APEG 410-OMe capped | 425 |
| E | t-butyl phenol-formaldehyde 2 mole ethoxylate (Resol type) | |
| F | t-amyl phenol-formaldehyde 2 mole ethoxylate (Novolak) | |

II. G A proprietary product (ex-Petrolite) — a mixture based on phenol formaldehyde resin alkoholates.

H $MD_{138}D'_{18}M$ + APEG 632 (APEG mol wt = 632)

I Block polyoxyalkylene glycol (Breox BL36-20 ex BPCI of MW 3600, ethylene oxide 10%).

III. *Phenol Formaldehyde Resin Etoxylates*

*An Example of the Method of Synthesis of t-Butylphenol Formaldehyde Resin 2-Mole Ethoxylate*

t-Butylphenol (300 g, 2.0 mole) was dissolved with stirring in an equal weight of xylene. 0.88 Ammonia solution (10 g) was added and the reactor contents heated to 85°C. Formaldehyde solution (200 g of a 36% w/w aqueous solution) was added slowly over $1^1/_2$ h whilst maintaining the temperature below 95°C. Once the addition was complete, the temperature was gradually raised to 130°C and water removed azeotropically using a Dean and Stark apparatus over 7h. At the end of this time the product had a water content of 0.16% w/w.

Potassium hydroxide (0.5 g) was added to the above product (500 g) and the mixture heated to 100°C. Water was stripped out under vacuum until a water content of less than 0.1% was achieved.

Ethylene oxide (2 mole equivalents based on t-butylphenol) was added at 130°C and 4 bar pressure over approximately 12 h. The xylene content was adjusted to 70% and the material used directly as a demulsifier.

1.2 *Demulsification Test Method*

A 50% water-in-oil emulsion was prepared at 45°C by milling a stirred mixture of stabilised Kuwait crude oil (200 $cm^3$) and distilled water (200 $cm^3$) in a 1 litre jacketed vessel until an emulsion was obtained with mean droplet size as determined by visual examination under a microscope was in the region of 10-20 micrometers.

Freshly prepared emulsion was divided into graduated centrifuge tubes (40 $cm^3$ of emulsion per tube). Demulsifiers were injected using a microlite syringe to give the desired concentration of additive.

The tube was stoppered, shaken for 20 seconds and stored in a water bath at 45°C. The rate of dehydratation was monitored by recording the volume of water phase over a period of time up to 60 minutes after addition of demulsifier.

2. *Examples of Synergism obtained by adition of Silicone Polyether Copolymers to Phenol Formaldehyde Ethoxylate Resins*

2.1 Four standard demulsifiers, two silicone polyether copolymers, A and D, and two ethoxylated phenol formaldehyde resins, E and F were injected into emulsions as single components and as blends. A concentration of 37.5 ppm of active material was used in each case:

(a) demulsifier B
(b) demulsifier D
(c) demulsifier E
(d) demulsifier F
(e) a 1:1 (w/w) mixture of B and D
(f) a 1:1 (w/w) mixture of E and F
(g) a 1:3 (w/w) mixture of B and E
(h) a 1:3 (w/w) mixture of D and E

Results are summarised in Table 1.

TABLE 1

*% Resolution (% Water of Total Water Present)*

| Time/Minutes | a | b | c | d | e | f | g | h |
|---|---|---|---|---|---|---|---|---|
| 3 | 0 | 0 | 0 | 0 | 0 | 0 | 45 | 13 |
| 5 | 2 | 0 | 0 | 0 | 2 | 2 | 94 | 65 |
| 7 | 6 | 1 | 0 | 4 | 6 | 12 | 95 | 88 |
| 10 | 8 | 1.5 | 0 | 15 | 8 | 28 | 95 | 90 |
| 20 | 23 | 3 | 0 | 44 | 35 | 52 | 95 | 90 |
| 30 | 34 | 5 | 1 | 50 | 59 | 55 | 95 | 90 |
| 60 | 65 | 10 | 3 | 55 | 70 | 60 | 95 | 90 |

Synergism is apparent when the silicone polyesters are added to phenol formaldehyde resins (ratio of 1:3 w/w).

2.2 A comparative study of a blend of B and E (1:3 w/w) against a commercially available demulsifier G at three concentrations:

TABLE 2

*% Resolution (% Water of Total Water Present)*

| Time/Minutes | (B + E)/ppm of active | | | G/ppm of active | | |
|---|---|---|---|---|---|---|
| | 12.5 | 25 | 50 | 12.5 | 25 | 50 |
| 3 | 0 | 1 | 80 | 0 | 0 | 6 |
| 5 | 0 | 21 | 100[1] | 0 | 0 | 40 |
| 7 | 2 | 37 | — | 0 | 3 | 90 |

TABLE 2 (continued)

*% Resolution (% Water of Total Water Present)*

| Time/Minutes | (B + E)/ppm of active 12.5 | 25 | 50 | G/ppm of active 12.5 | 25 | 50 |
|---|---|---|---|---|---|---|
| 10 | 6 | 49 | — | 0 | 12 | 100[3] |
| 20 | 18 | 65 | — | 1.5 | 58 | — |
| 30 | 26 | 75 | — | 6 | 80 | — |
| 40 | 32 | 75 | — | 11 | 100[2] | — |

*Notes:* [1] 100% after $3^1/_2$ minutes; [2] 100% after 42 minutes; [3] 100% after 12 minutes

These data show that the blended product performs favourably against the commercial product G. The individual components A and E have moderate emulsification properties (Example 2.1, Table 1).

2.3 Demulsifiers C and E were blended in various ratios and their performance compared with the two single components, all at 37.5 ppm.

TABLE 3

*% Resolution (% Water of Total Water Present)*

| % C: | 5 | 10 | 25 | 50 | 90 | — | 100 |
|---|---|---|---|---|---|---|---|
| % E: | 95 | 90 | 75 | 50 | 10 | 100 | — |
| Time/Minutes | | | | | | | |
| 3 | 1 | 7 | 28 | 4 | 4 | 0 | 0 |
| 5 | 11 | 50 | 82 | 7 | 7 | 0 | 0 |
| 7 | 40 | 77 | 87 | 9 | 9 | 6 | 5 |
| 10 | 64 | 84 | 92 | 14 | 14 | 15 | 19 |
| 20 | 80 | 86 | 100[1] | 29 | 25 | 34 | 40 |
| 30 | 80 | 87 | — | 40 | 30 | 40 | 45 |
| 60 | 80 | 88 | — | 56 | 40 | 48 | 50 |

*Note:* [1] 100% after 15 minutes

Synergism is observed when E is the major component, ideally between 75 and 95% (w/w), and C is the minor component (25 to 5% w/w).

2.4 A comparison of the performances of the blend C + E (1 + 3 w/w) and a commercial demulsifier, G at four concentrations:

TABLE 4

*% Resolution (% Water of Total Water Present)*

| Time/minutes | Concentration of C + E/ppm 12.5 | 25 | 50 | 75 | Concentration of G/ppm 12.5 | 25 | 50 | 75 |
|---|---|---|---|---|---|---|---|---|
| 3 | 0 | 0 | 17 | 60 | 0 | 0 | 2 | 12 |
| 5 | 0 | 2 | 90 | 100[2] | 0 | 0 | 28 | 66 |
| 7 | 1 | 8 | 100[1] | | 0 | 0.5 | 80 | 100 |
| 10 | 3 | 12.5 | | | 0 | 7 | 100[4] | |
| 20 | 9 | 17 | | | 0.5 | 75 | | |
| 30 | 16 | 36 | | | 3 | 100[3] | | |
| 45 | 30 | 44 | | | 14 | | | |
| 60 | 40 | 50 | | | 60 | | | |

The blend C and E compares favourably against G. The blend constituents, C and E compare very poorly on their own against G at all concentrations.

*Notes:* [1] 100% after 6 minutes
[2] 100% after 4$^1/_2$ minutes
[3] 100% after 25 minutes
[4] 100% after 8 minutes

2.5 Addition of the silicone polyether copolymer, A, to the commercial product G, a phenol formaldeyde resin, considerably improves the performance of G. Table 5 shows the relative performance of G and A + G (1:3 w/w) at 37.5 ppm.

TABLE 5

*% Resolution (% Water of Total Water Present)*

| Time/Minute | A + G | G |
|---|---|---|
| 3 | 0 | 0 |
| 5 | 2 | 1 |
| 7 | 10 | 4 |
| 10 | 56 | 15 |
| 12 | 94 | 28 |
| 20 | 100[1] | 86 |
| 25 | | 100[2] |

*Notes:* [1] 100% at 12.5 minutes
[2] 100% at 24 minutes

The above results clearly substantiate the synergistic effect of the demulsifier compositions of the present invention.

It is also clear that the demulsifiers of the present invention resolve emulsions more rapidly than conventional demulsifiers and will therefore not only allow a rapid throughput but will also enable smaller separation vessels to be used thus giving a significant economic advantage to operatives.

3. Example and Comparative test with blends in which the siloxane polyether copolymer has a molecular weight above 500 all injected at 37.5 ppm.

(a) a blend of A and E (1:3 w/w ratio)
(b) a blend of H and E (1:3 w/w ratio)
(c) demulsifier E alone

TABLE 6

*% Resolution (% Water of Total Water Present)*

| Time/Minute | a | b | c |
|---|---|---|---|
| 3 | 15 | 0 | 0 |
| 5 | 50 | 4 | 0 |
| 7 | 75 | 8 | 2.5 |
| 10 | 80 | 12.5 | 20 |
| 20 | 85 | 20 | 55 |
| 30 | 86 | 28 | 65 |
| 60 | 86 | 40 | 70 |

The above results show that optimum synergistic blends are obtained only with blends of silicone polyether copolymers having an APEC molecular weight below 500, preferably around 300-400, and alkyl phenol formaldehyde resin ethoxylates.

4. Example and Comparative Test are reported below in which a blend of siloxane polyether copolymer and phenol aldehyde resin alkoxylate is compared with another blend of the same resin alkoxylate with a polyalkylene glycol and a tertiary blend comprising all these compounds. In this example an emulsion comprising 25% water was prepared with Ninian stabilised crude. Three blends were prepared as follows:

(a) a blend of A and E (1:1 w/w ratio)
(b) a blend of I and E (1:1 w/w ratio)
(c) a blend of A, I and E (2:3:5 w/w ratio)

Table 7 illustrates the relative performance of a, b and c (60 ppm) on Ninian emulsion at 70°C.

TABLE 7

*% Resolution (% Water of Total water present)*

| Time/minutes | a | b | c |
|---|---|---|---|
| 1.5 | 17 | 19 | 26 |
| 3 | 40 | 60 | 60 |
| 5.5 | 75 | 80 | 95 |
| 8.5 | 86 | 95 | 100 |
| 12 | 92 | 100 | |
| 25 | 100 | | |

## Claims

1. A composition suitable for use as a demulsifying agent said composition comprising a blend of (a) a polyoxyalkylene-polysiloxane copolymer comprising a block or random copolymer of the general formula:

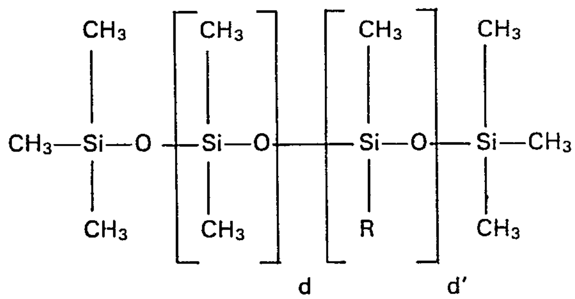

wherein d = 1 to 400 and d' = 1 to 50 and R is a block or random copolymer group of general formula:

$$-R'O(EO)_m(PO)_nR''$$

wherein R' is an alkylene group containing 3 to 10 carbon atoms, EO is an ethylene oxide group, PO is a propylene oxide group, R'' is an -OH radical, a hydrogen atom, a hydrocarbon group or an ester

group, neither group containing more than 7 carbon atoms and m and n are numbers in the range 2 to 11 and 0 to 8 respectively, and the total of m and n is such that together they give rise to a polyoxyalkylene group having a weight average molecular weight below 500 as measured by the hydroxyl method, and (b) an alkoxylated derivative of a phenol-aldehyde resin, said resin having a (i) phenol to aldehyde ratio of 2:1 to 1:5 (ii) a weight average molecular weight from 500-20,000 as determined by gel permeation chromatography against a polystyrene standard and (iii) a free aldehyde content below 6% by weight.

2. A composition according to claim 1 wherein the polysiloxane groups in the copolymer are in blocks or are randomly dispersed.

3. A composition according to claim 2 wherein the polyether group R has a molecular weight in the range of 200 to below 500.

4. A composition according to any one of the preceding claims wherein the ethylene oxide and propylene oxide units are present in the copolymer in a ratio of m:n in the range from 40:60 to 100:0.

5. A composition according to any one of the preceding claims wherein the phenol in the oxyalkylated derivative of phenol aldehyde resin has a $C_1$-$C_{18}$ alkyl substituent in the ortho- or para-position with respect to the phenolic hydroxyl group.

6. A composition according to any one of the preceding claims wherein the alkoxylated derivative of phenol aldehyde resin has from 1-50 moles of alkoxy groups per mole of the OH group present in the resin.

7. A composition according to any one of the preceding claims wherein the alkoxylate is derived from ethylene oxide or mixtures thereof with propylene oxide.

8. A composition according to any one of the preceding claims wherein the ratio of the polyoxyalkylene-polysiloxane copolymer to the alkoxylated derivative of the phenol-aldehyde resin is in the region of 1:20 - 20:1.

9. A composition according to any one of the preceding claims wherein said composition contains in addition a polyoxyalkylene glycol having a molecular weight in the region of 1000-5000 as determined by hydroxyl number and derived from one or more alkylene oxides selected from ethylene oxide, propylene oxide, butylene oxide and styrene oxide.

**Patentansprüche**

1. Zusammensetzung geeignet zur Verwendung als Entmischungsmittel, wobei die Zusammensetzung eine Mischung umfaßt von

(a) einem Polyoxyalkylen-Polysiloxancopolymer umfassend ein Block- oder statistisches Copolymer der allgemeinen Formel:

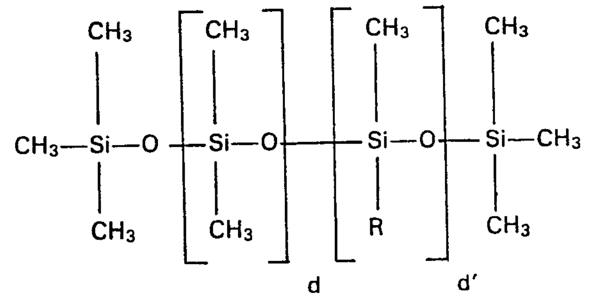

worin d = 1 bis 400 und d' = 1 bis 50 und R eine Block- oder statistische Copolymergruppe der allgemeinen Formel:

$$-R'O(EO)_m(PO)_nR''$$

ist, worin R' eine Alkylengruppe enthaltend 3 bis 10 Kohlenstoffatome ist, EO eine Ethylenoxydgruppe ist, PO eine Propylenoxydgruppe ist, R'' ein -OH -Rest, ein Wasserstoffatom, eine Kohlenwasserstoffgruppe oder eine Estergruppe ist, wobei keine Gruppe mehr als 7 Kohlenstoffatome enthält und m und n Zahlen im Bereich von 2 bis 11 und bzw. 0 bis 8 sind, und die Summe von m und n so ist, daß sie zusammen zu einer Polyoxyalkylengruppe mit einem durchschnittlichen Molekulargewicht unter 500, gemessen nach der Hydroxy-Methode, führen und,

(b) ein alkoxyliertes Derivat eines Phenol-Aldehyd Harzes, wobei das Harz hat (i) ein Phenol zu Aldehydverhältnis von 2:1 bis 1:5, (ii) ein durchschnittliches Molekulargewicht von 500-20.000, bestimmt durch Gel-Permeations-Chromatographie gegenüber einem Polystyrolstandard und (iii) einen freien Aldehydgehalt unter 6 Gew.-%.

2. Zusammensetzung nach Anspruch 1, worin die Polysiloxangruppen in dem Copolymer in Blöcken oder statistisch verteilt sind.

3. Zusammensetzung nach Anspruch 2, worin die Polyethergruppe R ein Molekulargewicht im Bereich von 200 bis unter 500 hat.

4. Zusammensetzung nach einem der vorhergehenden Ansprüche, worin die Ethylenoxyd- und Propylenoxydeinheiten in dem Copolymer in einem Verhältnis von m:n in dem Bereich von 40:60 bis 100:0 vorhanden sind.

5. Zusammensetzung nach einem der vorhergehenden Ansprüche, worin das Phenol in dem oxyalkylierten Derivat des Phenolaldehydharzes einen $C_1$-$C_{18}$-Alkylsubstituenten in der ortho- oder para-Stellung im Bezug auf die pohenolische Hydroxylgruppe hat.

6. Zusammensetzung nach einem der vorhergehenden Ansprüche, worin das alkoxylierte Derivat des Phenolaldehydharzes von 1-50 Mole Alkoxygruppen pro Mol der in dem Harz vorhandenen OH-Gruppe hat.

7. Zusammensetzung nach einem der vorhergehenden Ansprüche, worin das Alkoxylat von Ethylenoxyd oder Mischungen davon mit Propylenoxyd herstammt.

8. Zusammensetzung nach einem der vorhergehenden Ansprüche, worin das Verhältnis des Polyoxyalkylen-Polysiloxan-Copolymers zu dem alkoxylierten Derivat des Phenolaldehydharzes in dem Bereich von 1:20 - 20:1 ist.

9. Zusammensetzung nach einem der vorhergehenden Ansprüche, worin die Zusammensetzung zusätzlich ein Polyoxyalkylenglykol mit einem Molekulargewicht in dem Bereich von 1000-5000, bestimmt durch die Hydroxylzahl, und abstammend von einem oder mehreren Alkylenoxyden, ausgewählt aus Ethylenoxyd, Propylenoxyd, Butylenoxyd und Styroloxyd, enthält.

**Revendications**

1. Composition convenant pour servir d'agent désémulsionnant, ladite composition comprenant un mélange (a) d'un copolymère de type polyoxyalkylène-polysiloxane, comprenant un copolymère séquencé ou statistique de formule générale:

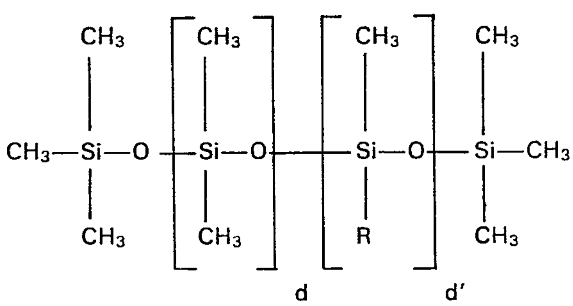

dans laquelle d vaut 1 à 400 et d' vaut 1 à 50, et R représente un groupe copolymère séquencé ou statistique de formule générale

$$-R'O(OE)_m(OP)_nR''$$

dans laquelle R' est un groupe alkylène contenant 3 à 10 atomes de carbone, OE est un groupe oxyde d'éthylène, OP est un groupe oxyde de propylène, R'' représente un radical -OH, un atome d'hydrogène, un groupe hydrocarboné ou un groupe ester, aucun de ces groupes ne contenant plus de 7 atomes de carbone, et m et n sont des nombres de valeur comprise entre 2 et 11, d'une part, et 0 et 8, d'autre part, respectivement, et le total de m et de n étant tel qu'ensemble ils donnent naissance à un groupe polyoxyalkylène ayant un poids moléculaire moyen en poids inférieur à 500, selon la mesure effectuée d'après la méthode de détermination de l'indice d'hydroxyle, et (b) un dérivé acloxylé d'une résine phénol-aldéhyde, ladite résine ayant (i) un rapport phénol à aldéhyde compris entre 2:1 et 1:5, (ii) un poids moléculaire moyen en poids de 500 à 20 000, selon la détermination faite par chromatographie de perméation d'un gel par rapport à un polystyrène étalon, et (iii) une teneur en aldéhyde libre inférieure à 6% en poids.

2. Composition selon la revendication 1, dans laquelle les groupes polysiloxanes du copolymère sont présents en blocs ou longues séquences ou sont dispersés au hasard (répartition statistique).

3. Composition selon la revendication 2, dans laquelle le groupe polyéther R a un poids moléculaire compris entre 200 et moins de 500.

4. Composition selon l'une quelconque des revendications précédentes, dans laquelle les motifs oxyde d'éthylène et oxyde de propylène sont présents dans le copolymère selon un rapport de m:n compris entre 40:60 et 100:0.

5. Composition selon l'une quelconque des revendications précédentes, dans laquelle le phénol du dérivé oxyalkylé de résine phénol-aldéhyde comporte un substituant alkyle en $C_1$ à $C_{18}$ en position ortho ou para par rapport au groupe hydroxyle phénolique.

6. Composition selon l'une quelconque des revendications précédentes, dans laquelle le dérivé alcoxylé de la résine phénol-aldéhyde comporte 1 à 50 moles de groupe alcoxy par mole de groupe OH présent dans la résine.

7. Composition selon l'une quelconque des revendications précédentes, dans laquelle l'alcoxylate dérive de l'oxyde d'éthylène ou de mélanges de l'oxyde d'éthylène avec l'oxyde de propylène.

8. Composition selon l'une quelconque des revendications précédentes, dans laquelle le rapport du copolymère de type polyoxyalkylène-polysiloxane au dérivé alcoxylé de la résine phénol-aldéhyde se situe dans la région de 1:20 à 20:1.

9. Composition selon l'une quelconque des revendications précédentes, dans laquelle ladite composition contient, en outre, un polyoxyalkylène glycol ayant un poids moléculaire se situant dans la région de 1000 à 5000, selon la détermination faite d'après la détermination de l'indice d'hydroxyle, et qui dérive d'un ou plusieurs oxydes d'alkylène choisis parmi l'oxyde d'éthylène, l'oxyde de propylène, l'oxyde de butylène et l'oxyde de styrène.